# FASCICULE DE BREVET EUROPEEN

(11) **EP 0 683 342 B1**
(45) Date de publication et mention de la délivrance du brevet: **17.09.1997**
(21) Numéro de dépôt: 95400668.0
(22) Date de dépôt: 24.03.1995
(51) Int. Cl.: F16L 3/123, F16L 3/233

(54) **Collier de fixation d'éléments allongés quelconques**
Halteteil für langgestreckte Gegenstände
Clamp for elongated objects

(30) Priorité: 18.05.1994 FR 9406082
(43) Date de publication de la demande: 22.11.1995
(73) Titulaire: RAPID S.A., F-75017 Paris (FR)
(72) Inventeur: Leon, Jean-Pierre, F-78800 Houilles (FR)
(74) Mandataire: Durand, Yves Armand Louis

(56) Documents cités:
- CH-A- 259 578
- GB-A- 1 173 913
- US-A- 2 279 866
- US-A- 2 692 746

## Description

La présente invention a pour objet un collier de fixation d'éléments allongés quelconques tels que par exemple des câbles électriques ou des canalisations.

On connaît déjà depuis longtemps des colliers formés de deux pièces articulées par une partie formant charnière permettant la mise en place du collier autour d'un faisceau de câbles ou de canalisations à fixer sur une cloison par exemple. Mais ce genre de collier demeure relativement coûteux et la partie formant charnière du collier ne peut pas être recouverte d'éléments de protection en caoutchouc ou en matériau élastomère par exemple, de sorte que cette partie formant charnière constitue un élément agressif.

On connaît par ailleurs des colliers métalliques sans charnière (US-A-2 692 746), mais ces colliers, bien qu'élastiquement déformables, demeurent relativement rigides et sont bien souvent difficiles à manipuler pour réaliser la fixation.

Aussi, la présente invention a pour but de remédier notamment aux inconvénients ci-dessus en proposant un collier de fixation en une seule pièce qui ne comporte aucune partie agressive et qui ne pose aucune difficulté de manipulation lors de la fixation.

A cet effet, l'invention a pour objet un collier de fixation d'éléments allongés quelconques tels que par exemple des câbles électriques ou des canalisations et du type comprenant une âme métallique en forme de boucle ouverte recouverte au moins en partie d'un élément souple de protection, caractérisé en ce que l'âme métallique comporte au moins une zone d'affaiblissement transversale qui est entièrement recouverte par ledit élément souple et qui est rupturable sous l'effet de la fermeture du collier.

On comprend donc déjà qu'à la rupture du collier lors de sa fermeture, l'élément souple entourant la zone d'affaiblissement rupturable jouera alors avantageusement le rôle d'une charnière qui ne présentera aucune agressivité vis-à-vis des câbles ou des canalisations enserrés par le collier.

Ce collier est encore caractérisé en ce que la zone d'affaiblissement précitée est constituée par une ligne d'entailles formées par des perforations et/ou des encoches, et analogues.

Suivant un mode de réalisation préféré, l'âme métallique en forme de boucle ouverte est entièrement recouverte par l'élément souple à l'exception de ses extrémités libres.

Ce collier pourra comporter une âme métallique présentant la forme générale d'un U dont l'une des branches est rectiligne et dont l'autre branche comporte une extrémité libre repliée vers l'extérieur du U.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue en perspective du collier de l'invention à l'état de repos, c'est-à-dire en position ouverte.

La figure 2 est également une vue en perspective de ce collier, mais illustrée en position fermée et prête à la fixation.

On voit sur les figures que le collier de fixation selon cette invention se compose essentiellement d'une âme métallique 1 en forme de boucle ouverte, cette âme métallique étant réalisée par découpage d'un feuillard et étant enrobée sur une bonne partie de sa longueur par un élément souple 2 en caoutchouc, élastomère ou matière synthétique appropriée quelconque.

L'âme métallique 1 comporte une zone d'affaiblissement transversale repérée d'une manière générale en 3 sur les figures.

Cette zone d'affaiblissement 3 est entièrement recouverte par l'élément de protection souple 2, comme on le voit bien sur les figures.

La zone d'affaiblissement transversale 3 est constituée par une ligne d'entailles pouvant revêtir une forme quelconque, par exemple la forme de deux encoches latérales 5 entre lesquelles est prévue une perforation 4 comme illustré sur les dessins, étant entendu qu'une telle ligne d'entailles peut permettre la rupture de la zone d'affaiblissement 3 lors de la mise en place et de la fermeture du collier, comme on le décrira en détail plus loin.

Suivant l'exemple de réalisation représenté, l'âme métallique 1 en forme de boucle ouverte est entièrement recouverte par l'élément de protection souple 2 à l'exception de ses extrémités libres la, lb qui comportent chacune un orifice 6 permettant la fixation, à l'aide d'un boulon par exemple (non représenté).

Comme cela est bien visible sur les dessins, l'âme métallique 1, en position de repos, présente la forme générale d'un U dont l'une 7 des branches est sensiblement rectiligne et dont l'autre branche 8 comporte l'extrémité libre lb qui est repliée vers l'extérieur du U, étant entendu que la zone ou ligne d'affaiblissement 3 est prévue dans la base de ce U.

Le collier pourrait parfaitement avoir une autre forme que celle représentée sans sortir du cadre de l'invention.

La mise en oeuvre de ce collier s'effectue de la façon suivante.

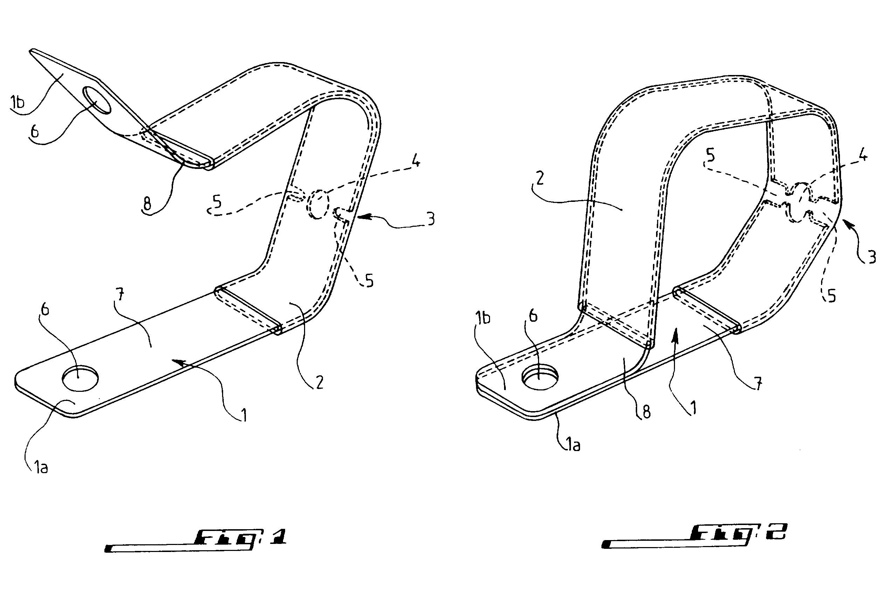

Le collier se trouvant dans la position visible sur la figure 1, est mis en place sur un faisceau de câbles électriques ou de tuyaux par exemple (non représentés).

Ensuite, la boucle ouverte que constitue le collier est fermée, comme on le voit sur la figure 2. Cette fermeture s'effectuera sans aucune difficulté, grâce à la rupture de la ligne d'entailles 3, comme cela est encore bien visible sur la figure 2, et le collier restera articulé par la partie de l'élément souple de protection 2 au niveau de ladite ligne d'entailles.

Ensuite, il suffira d'effectuer, au travers des orifices 6 et par boulonnage par exemple, la fixation du collier sur un élément quelconque, tel que par exemple une cloison, un poteau ou un élément de structure appartenant à un véhicule automobile.

On a donc réalisé suivant l'invention un collier de fixation perfectionné qui est facilement manipulable, qui ne présente aucune difficulté de pose et qui n'est nullement agressif, grâce à l'élément souple de protection 2 qui, après rupture de l'âme métallique, constitue en quelque sorte une continuité du collier au niveau de la ligne de rupture.

Bien entendu, l'invention n'est nullement limitée au mode de réalisation décrit et illustré qui n'a été donné qu'à titre d'exemple.

C'est ainsi que le collier peut présenter une forme autre que celle d'un U. Egalement, la ligne d'entailles peut être prévue de telle sorte qu'elle ne se rompe pas après fermeture et fixation du collier. Plusieurs lignes d'entailles transversales peuvent également être prévues, si nécessaire.

## Revendications

1. Collier de fixation d'éléments allongés quelconques tels que par exemple des câbles électriques ou des canalisations et du type comprenant une âme métallique (1) en forme de boucle ouverte recouverte au moins en partie d'un élément souple de protection (2), caractérisé en ce que l'âme métallique (1) comporte au moins une zone d'affaiblissement transversale (3) qui est entièrement recouverte par ledit élément souple (2) et qui est rupturable sous l'effet de la fermeture du collier.

2. Collier selon la revendication 1, caractérisé en ce que la zone d'affaiblissement précitée (3) est constituée par une ligne d'entailles formées par des perforations (4) et/ou des encoches (5) et analogues.

3. Collier selon la revendication 1 ou 2, caractérisé en ce que l'âme métallique (1) en forme de boucle ouverte est entièrement recouverte par l'élément souple (2) à l'exception de ses extrémités libres (1a, 1b).

4. Collier selon l'une des revendications 1 à 3, caractérisé en ce que l'âme métallique (1) présente la forme générale d'un U dont l'une (7) des branches est rectiligne et dont l'autre branche (8) comporte une extrémité libre (1b) repliée vers l'extérieur du U.

## Patentansprüche

1. Schelle zur Befestigung von irgendwelchen langgestreckten Elementen wie z.B. elektrischen Kabeln oder Leitungen und derjenigen Gattung mit einer mit einem nachgiebigen Schutzelement (2) wenigstens zum Teil überzogenen Metallseele (1) in der Gestalt einer offenen Schleife, dadurch gekennzeichnet, daß die Metallseele (1) wenigstens einen Querabschwächungsbereich (3) aufweist, der mit dem besagten nachgiebigen Element (2) vollständig überzogen ist und der unter der Wirkung der Schließung der Schelle brechbar ist.

2. Schelle gemäß Anspruch 1, dadurch gekennzeichnet, daß der vorgenannte Abschwächungsbereich (3) durch eine Linie von durch Lochungen (4) und/oder Kerben (5) oder dergleichen gebildeten Einschnitten gebildet ist.

3. Schelle nach Anspruch 1 oder 2, dadurch gekennzeichnet, daß die Metallseele (1) in der Gestalt einer offenen Schleife mit Ausnahme ihrer freien Enden (1a, 1b) mit dem nachgiebigen Element (2) vollständig überzogen ist.

4. Schelle nach einem der Ansprüche 1 bis 3, dadurch gekennzeichnet, daß die Metallseele (1) die allgemeine Gestalt eines U's aufweist, dessen einer (7) der Schenkel geradlinig ist und dessen anderer Schenkel (8) ein nach aussen des U's umgebogenes freies Ende (1b) aufweist.

## Claims

1. Collar for the fastening of any elongated elements such for example as electric cables or pipings and of the type comprising a metal core (1) in the shape of an open loop covered at least in part with a flexible protective element (2), characterized in that the metal core (1) comprises at least one zone of transverse weakening (3) which is fully covered with the said flexible element (2) and which is frangible under the effect of the closing of the collar.

2. Collar according to claim 1, characterized in that the aforesaid weakening zone (3) is constituted by a line of cuts formed of perforations (4) and/or of notches (5) and the like.

3. Collar according to claim 1 or 2, characterized in that the metal core (1) in the shape of an open loop is fully covered with the flexible element (2) except for its free ends (1a, 1b).

4. Collar according to one of claims 1 to 3, characterized in that the metal core (1) exhibits the general shape of a U one (7) of the legs of which is rectilinear and the other leg (8) of which comprises a free end (1b) bent outwards of the U.
